# EUROPEAN PATENT SPECIFICATION

(11) **EP 1 646 695 B1**
(45) Date of publication and mention of the grant of the patent: **28.01.2015**
(21) Application number: 03817496.7
(22) Date of filing: 13.11.2003
(51) Int. Cl.: C09D 183/04

(54) **SOLVENT FREE SILICONE RUBBER PROTECTIVE COATING COMPOSITION**
LÖSUNGSMITTELFREIE SILICONGUMMIBESCHICHTUNGSZUSAMMENSETZUNG
COMPOSITION DE REVETEMENT PROTECTEUR DE CAOUTCHOUC DE SILICONE EXEMPTE DE SOLVANTS

(30) Priority: 17.07.2003 CA 2435347
(43) Date of publication of application: 19.04.2006
(73) Proprietor: CSL Silicones Inc., Guelph, Ontario N1H 1B5 (CA)
(72) Inventor: AHMED, Farooq, Guelph, Ontario N1H 7J4 (CA); HUDA, Faisal, Toronto, Ontario M8W 1A6 (CA); HUDA, Seraj, Ul, Toronto, Ontario M8W 1A6 (CA); BARR, John, Richard, Eden Mills, Ontario N0B 1P0 (CA)
(74) Representative: Brooks, Nigel Samuel
(86) International application number: PCT/CA2003/001736
(87) International publication number: WO 2005/007763

(56) References cited:
- EP-A- 0 643 106
- US-A- 5 326 804
- US-B1- 6 437 039

## Description

### FIELD OF THE INVENTION

The present invention is directed to a solvent-free silicone rubber coating composition of very high solids content, which cures with minimal shrinkage and has health, safety and environmental benefits.

### BACKGROUND OF THE INVENTION

It is common to coat various surfaces with compositions to protect the surface against environmental effects. A common coating composition is an epoxy based composition which utilizes a two-part composition which is coated on the surface by brushing, dipping or spraying. Epoxy based coating compositions have the advantage of providing a coating with a high-gloss surface. However the epoxy based coatings generally require that the two separate parts be mixed together and used within a very short period of time. If the composition is not utilized with this period of time, it will cure before it can be applied to the surface. In addition, epoxy based compositions may emit volatile organic compounds (VOC) and require care in handling.

Silicone based compositions have also been utilized for coating of surfaces to protect the surface against environmental effects. Silicone compositions offer the advantage of long life and high resistance. However due to the nature of the curing reaction for silicone compositions, the thickness of the coating may shrink causing the surface of the coating to have a matte or satin finish. It would be advantageous to provide a silicone based composition having long life and high resistance along with minimal shrinkage of,the coating and a high-gloss finish.

### SUMMARY OF THE INVENTION

The present invention provides a solvent-free silicone rubber composition for coating surfaces. The composition provides for easy and convenient application by conventional methods such as brushing, rolling, dipping, flow or spraying. The coating formed from the composition provides a guard against environmental effects along with high physical strength, elasticity and adhesion achieved with a suitable blend of additives, reinforcing and extending fillers.

The polyorganosiloxane rubber coating composition contains a functionalized polydiorganosiloxane polymerizable under suitable conditions to form a coating and additives selected from catalysts or initiators for curing the polymerizable polydiorganosiloxane, adhesion promoters, reinforcing fillers, and inorganic extending or non-reinforcing fillers. The composition is free of solvents or diluents and the viscosity of the polydiorganosiloxane is chosen to allow the composition to be applied by standard techniques to cure with minimal shrinkage and high gloss.

In one aspect, the present invention provides for a one-part solvent-free room temperature vulcanizing polyorganosiloxane rubber coating composition to provide a high-gloss surface coating. The composition comprises the product which is obtained by mixing the following:
a) from 10 to 90 weight percent of one or more polydiorganosiloxanes of the general formula

   HO[(R)₂SiO]ₙ(R)₂SiOH

   in which R is a monovalent alkyl or alkylene radical having 1 to 8 carbon atoms, optionally substituted with one or more halogen atoms, or a phenyl radical, optionally substituted with one or more halogen atoms, and n has an average value such that the viscosity is from 0.65 to 40,000 centipoise (6.5 × 10⁻⁴ to 40 Pa·s) at 25°C. Polydiorganosiloxanes also include dimers;
b) from 0 to less than 90 weight percent of an inorganic extending or non-reinforcing filler;
c) from 0.1 to 50 weight percent of an amorphous SiO₂ reinforcing filler, preferably from 1 to 30 weight percent, and more preferably from 2 to 20 weight percent;
   The surface of amorphous silica may also be treated with organic molecules such as hexamethyldisilazane or polydimethylsiloxane or organosilane;
d) from 0.1 to 25 weight percent of a cross-linking agent of general formula 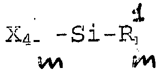 where R¹ is an alkyl, alkylene or phenyl radical (preferably methyl or ethyl), X is an alkyl radical with a functional group selected from carboxyl, ketoximino, alkoxy, carbonyl or amine linked directly to the silicone atom and m is 0 or 1;
   The most preferable cross-linker is oximinosilane cross-linking agent of the general formula

   R"Si(ON=CR'₂)₃

   in which R" and R' are independently selected from monovalent alkyl or alkylene radicals having 1 to 8 carbon atoms or a phenyl radical which may optionally be substituted with an alkyl radical having 1 to 8 carbon atoms;
e) from 0 to 25 weight percent of a polymer chain extender of the general formula 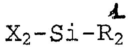 where R¹ is an alkyl, alkylene or phenyl radical (preferably methyl or ethyl) and X is an alkyl radical with a functional group selected from carboxyl, ketoximino, alkoxy, carbonyl or amine linked directly to the silicone atom.
f) from 0 to 10 weight percent of an adhesion promoter of the general formula 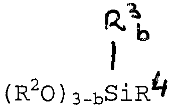 in which R² and R³ are independently selected from monovalent alkyl or alkylene radicals having 1 to 8 carbon atoms or a phenyl radical which may optionally be substituted with an alkyl radical having 1 to 8 carbon atoms, b is an integer between 0 and 3, and R⁴ is a saturated, unsaturated or aromatic hydrocarbon radical having 1 to 10 carbon atoms which may optionally contain a functional group; and
g) from 0.01 to 5 weight percent of an organometallic salt as a condensation catalyst of the general formula

   M(R⁵)ₓ(OOC-R⁵)_{y-x}

   where M is a transition metal, preferably Ti, V, Sn and Zr, R⁵ is an alkyl or alkylene radical with 1 to 20 carbon atoms, x and y are integers having a value between 0 and 4.

The present invention also provides for a method of coating surfaces to provide a solvent-free coating with minimal shrinkage on the surface. The method comprises applying to the surface a thin layer of the above polyorganosiloxane rubber composition and allowing the layer of the coating to cure.

### DETAILED DESCRIPTION OF THE INVENTION

The solvent-free polyorganosiloxane rubber compositions of the present invention are ideally suited for protection of surfaces from environmental effects. Such protection includes corrosion protection of metal or concrete surfaces and structures against salt spray and chemical environments including direct exposure to salt water, salt fog, gases and other industrial pollutants. The compositions of the present invention can also be used to coat metal surfaces of motor vehicles which may be exposed to high salt condition during the winter season. The coating composition of the present invention is also useful for coating electric transmission towers and bridges for corrosion protection of metal or concrete structures directly exposed to salt water and industrial pollution, especially sulfur based. The compositions also provide protection against the effects of weathering from exposure to, among others, UV radiation. The compositions of the present invention are particularly useful on marine installations, such as fouling resistant coatings of ship hulls, oil rigs, docks, piers, buoys, water intake pipes and various submerged structures.

The composition containing alumina trihydrate can be utilized as a protective coating on electrical insulators providing both corrosion and leakage current protection. The coating composition can also be utilized for forming an impervious layer by coating textiles such as geo-textile or nylon, cotton or other fabrics to be used as chemical containment membranes or as tents, awnings, canopies, etc. The absence of solvents or diluents, especially volatile organic compounds (VOCs), in the coating composition makes it ideal for use in contained areas where a minimum level of VOC is required. The absence of solvents or diluents also results in a coating having a high-gloss surface with minimal shrinkage of the thickness of the coating when curing.

Because it is made of silicone, the resulting smooth, high-gloss coating on the surface provides protection against the otherwise damaging effects of environmental weathering, UV exposure, hydrolysis, and other effects. Because of its naturally hydrophobic nature, the external layer of silicone creates a highly hydrophobic coating of very low cost.

The one-part moisture cure polyorganosiloxane rubber compositions of the present invention for use as a protective coating contains from 10 to 90 weight percent of one or more polydiorganosiloxanes of the general formula

HO[(R)₂SiO]ₙ(R)₂SiOH

in which R is a monovalent alkyl or alkylene radical having 1 to 8 carbon atoms, optionally substituted with one or more halogen atoms, or a phenyl radical, optionally substituted with one or more halogen atoms, and n is an integer greater than or equal to 1.

Preferably, n has an average value such that the viscosity is from 0.65 to 40,000 centipoise (6.5 × 10⁻⁴ to 40 Pa·s) at 25°C, more preferably, n has an average value such that the viscosity is between 1,000 and 10,000 cP (1 to 10 Pa·s) at 25°C, and most preferably, n has an average value such that the viscosity is between 1,000 and 5,000 centipoise (1 to 5 Pa·s) at 25°C. Polydimethylsiloxane is the most preferable silicone polymer.

The one part moisture cure composition also contains from 0.1 to 25 weight percent, preferably from 3 to 10 weight percent of an organofunctional cross-linking agent of the general formula 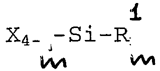 where R¹ is an alkyl, alkylene or phenyl radical (preferably methyl or ethyl), X is an alkyl radical with a functional group selected from carboxyl, ketoximino, alkoxy, carbonyl or amine linked directly to the silicone atom and m is 0 or 1. Preferably, the cross-linking agent is an oximinosilane cross-linking agent of the general formula

R"Si(ON=CR'₂)₃

in which R" and R' each represent a monovalent alkyl or alkylene radical having 1 to 8 carbon atoms or a phenyl radical, preferably an alkyl radical such as methyl, ethyl, propyl, butyl, or an alkylene radical such as vinyl, allyl, or a phenyl radical. The preferred R and R' are alkyl or vinyl radicals, most preferably methyl and ethyl radicals.

The one part moisture cure composition optionally contains from 0 to 25 weight percent of a polymer chain extender of formula 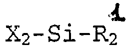 where R¹ is an alkyl, alkylene or phenyl radical (preferably methyl or ethyl) and X is an alkyl radical with a functional group selected from carboxyl, ketoximino, alkoxy, carbonyl or amine linked directly to the silicon atom.

The one part moisture cure composition also contains from 0 to 10 weight percent of an organofunctional silane as an adhesion promoter. Preferably the organofunctional silane has the general formula 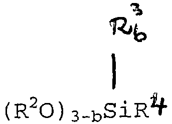 wherein R² and R³ are independently selected from monovalent alkyl or alkylene radicals having 1 to 8 carbon atoms or a phenyl radical which may optionally be substituted with an alkyl radical having 1 to 8 carbon atoms, b is an integer from 0 to 3, preferably 0, and R⁴ is a saturated, unsaturated or aromatic hydrocarbon radical having 1 to 10 carbon atoms, which may be further functionalized by a member selected from the group consisting of amino, ether, epoxy, isocyanate, cyano, acryloxy and acyloxy and combinations thereof. R² and R³ are preferably an alkyl radical such as, for example, methyl, ethyl, propyl, butyl, or an alkylene radical such as vinyl or allyl. More preferably R² and R³ are alkyl radicals, most preferably methyl, ethyl or propyl radicals. Preferably, R⁴ is an alkyl group, more preferably, further functionalized by one or more amino groups. The most preferred organofunctional silane adhesion promoter is N-(2-aminoethyl-3-aminopropyl)trimethoxysilane.

The one part moisture cure composition additionally contains from 0.01 to 5 weight percent of an organometallic salt of a carboxylic acid as a condensation catalyst, which accelerates the aging of the composition. Preferably, the organometallic salt is selected from the group dibutyltin diacetate, stannous octoate, dibutyltin dioctoate and dibutyltin dilaurate. Most preferably, the organotin salt is dibutyltin dilaurate of the formula:

(C₄H₉)₂Sn(OCOC₁₀H₂₀CH₃)₂

The one part moisture cure compositions may contain other optional ingredients such as pigments and fillers in minor amounts provided the addition of the ingredients does not cause degradation of the desired properties of the cured coating made from the composition. One commonly utilized optional ingredient is a pigment, most preferably present in amounts up to about 4 weight percent.

The one-part moisture cure RTV solvent-free polyorganosiloxane composition of the present invention is prepared by mixing the ingredients together in the absence of moisture. The silane is moisture sensitive and will undergo cross-linking in the presence of moisture such that the mixture must be essentially absent of free moisture when the silane is added and maintained in a moisture free state until curing is desired.

A preferred method of mixing comprises mixing the diorganosiloxane fluids with the extending and reinforcing fillers and other optional fillers and pigments. Thereafter, the oximinosilane and organofunctional silanes are added and mixed under a nitrogen atmosphere. The organometallic salt is added to the mixture and the mixture is then dispensed in sealed containers for storage prior to use.

The compositions of the present invention also contain from 0 to less than 90 weight percent, preferably from 10 to 50 weight percent, and more preferably from 15 to 40 weight percent, of inorganic extending or non-reinforcing fillers selected based upon the required properties and the final usage of the composition. For example, the fillers may be selected to increase the resistance of the coating to environmental effects, including high temperature stability of the cured product. The extending fillers are preferably selected from inorganic materials such as talc, calcium carbonate, barium sulfate, iron oxide, diatomaceous earth, quartz, crystalline silica, titanium dioxide, alumina trihydrate, zinc oxide, zirconium oxide, zirconium silicate, zinc borate, chromic oxide, zinc powder, aluminum powder, nickel powder, silver coated metal powder and metal coated glass particles.

For applications where corrosion protection is required the preferred fillers will be calcium carbonate, diatomaceous earth or quartz.

The coating composition containing surface treated and chloride free amorphous silica that provides a transparent layer of very low surface energy can be applied as an anti-graffiti coating.

For underground or underwater application where the coating is exposed to a cathodic potential, zinc or aluminum powder is added. Metal coated glass or silver coated metal powder or carbon or graphite or a combination of two or more is also added to minimize the internal electrical resistance to electron flow.

For fouling resistance the preferred fillers will be surface treated or untreated quartz, talc or calcium carbonate. Fouling resistant coatings also require good physical strength to withstand the pressure of water current during the movement of ships and boats. Quartz enhances the physical strength when used in combination with amorphous silica.

For applications where high temperature stability is required, such as the coating of smoke stacks, exhaust pipes and mufflers of motor vehicles, the preferred filler will be iron oxide, zinc oxide, titanium dioxide, zirconium oxide, zinc borate or chromic oxide.

For coatings requiring higher strength, crystalline silica is utilized, while for coatings for electrical insulators the composition will contain alumina trihydrate. In an aspect of the invention, the composition is for coating high voltage electrical insulators and further includes from 30 to 50 weight percent of alumina trihydrate. Preferably, the alumina trihydrate has a median particle size of 13 µm, contains about 65.1 percent Al2O3, about 34.5 percent combined H2O, about 0.3 percent Na2O, about 0.02 percent CaO, about 0.01 percent SiO₂ and has a specific gravity of about 2.42. More preferably, the alumina trihydrate is present in a proportion of 90 to 110 parts by weight per 100 parts by weight of the polyorganosiloxanes. The amount of filler may be increased within the range to improve the desired properties.

For fire resistance the preferred fillers will be quartz, zinc oxide, zinc borate and chromic oxide. A suitable combination of these fillers also provides protection of the structure from damage by heat during intense fire.

The compositions of the present invention also contain from 0.1 to 50 weight percent of an amorphous SiO₂ reinforcing filler, preferably from 1 to 30 weight percent, and more preferably from 2 to 20 weight percent. Preferably the amorphous SiO₂ filler has a surface area of between 20 to 500 m²/g and a particle size range between 0.005 and 0.04 µm. The specific gravity of the filler is preferably 2.2. The surface of amorphous silica may also be treated with organic molecules such as hexamethyldisilazane or polydimethylsiloxane or organosilane.

In all of the above compounds, the alkyl includes straight, branched or cyclic radicals. Among the alkyl groups are C₁₋₈ straight or branched-chain alkyls such as, for example, methyl, ethyl, propyl, isopropyl, n-butyl, isobutyl, tert-butyl, pentyl, isopentyl and hexyl, the cycloalkyl are C₃₋₈ cycloalkyls such as, for example, alkenyl cyclopropyl, cyclobutyl and cyclohexyl, the alkenyl groups are C₁₋₈ alkenyl such as, for example, vinyl and allyl. The above groups as well as the phenyl radicals may be further functionalized by including in the chain or ring structure, as the case may be, a group selected from the class consisting of amino, ether, epoxy, isocyanate, cyano, acryloxy, acyloxy and combinations, so long as the functionalization does not adversely affect the desired properties of the compound.

The surface to be protected is coated with the composition by conventional methods such as dipping, brushing or spraying. Preferably, the surface to be protected is coated by spraying one or more applications of the composition of the present invention. The composition may be adjusted to the consistency suitable for use in these methods by heating, particularly for spray application. The thickness of the coating will depend upon the specific requirements of the application and the desired level of protection. For most applications the coating generally has an average thickness from 150 µm. After the coating is formed on the surface, the coating is allowed to crosslink and cure.

The improved coating of the present invention is capable of protecting surfaces from environmental effects including metal and concrete surfaces from corrosion in the presence of moisture such as rain or fog, contaminated atmospheres, salt spray or direct exposure to salt water.

The improved coating of the present invention is particularly useful for protecting metal surfaces which are directly exposed to salt water. Such surfaces include the hulls of ships and other vessels, oil drilling rigs, harbor and pier structures, etc. Due to the high adhesive strength and surface wetting characteristics of coatings formed from compositions of the present invention, surface pretreatment such as sandblasting and/or profiling is avoided. This saves time, money and provides additional health, safety and environmental benefits. When the coating is used on the hulls of ships, further benefits such as fouling resistance in addition to the corrosion protection are achieved. The coating does not allow marine life, such as barnacles, to easily attach to the surface. Any such marine life that attempts to attach to the surface is generally removed from the surface by high pressure washing or by shear forces from movement of the vessel through the water. As the composition does not contain any toxic release substances, such as VOCs or metals such as tin or copper, marine life is not killed and environmental impact is minimized. Additionally, clean up of the surface is generally accomplished by high pressure washing and/or hand or mechanical wiping and does not require the scraping operations commonly utilized during hull cleaning of ships, or other marine installations. As clean up of surfaces coated with the composition of the present invention is easily accomplished, the composition can also be used as an anti-graffiti coating.

The present invention also provides for a coating composition resistant to the disbonding effects of cathodic protection of submerged and below grade structures and of structures made of dissimilar metals.

The compositions of the present invention can also provide fire resistance and protection to structure from the damages by heat during intense fire.

The compositions of the present invention also provide resistance to disbondment from cathodic protection of underwater and below grade structures.

The following examples are included to illustrate the preferred embodiments of the invention and to demonstrate the usefulness of the coating and are not intended to limit in any way the scope of protection for the invention.

### EXAMPLE 1

A solvent-free coating composition was prepared by mixing 46 parts by weight of hydroxyl terminated polydimethylsiloxane polymer of viscosity 2,000 centipoise (2 Pa·s) at 25°C and 5 parts by weight of amorphous silica of specific gravity 2.2 and surface area of 130 m²/g. Then 6 parts by weight of methyl tris-(methyl ethyl ketoxime) silane and 1 part by weight of N-(2-aminoethyl-3-aminopropyl) trimethoxy silane were added. Then 39 parts by weight of quartz powder was also added and mixed along with 0.1 parts by weight of dibutyltin dilaurate. To prepare a coating with the desired color, 3 parts by weight of pigment paste were also added.

The finished product had a viscosity that made it suitable for application by roller, brush and spray.

The cured coating applied at 150 µm thickness possessed high-gloss and scratch resistance properties. The gloss value of 90 gloss units @ 60° angle was recorded using a gloss meter manufactured by BYK-Gardner USA.

### EXAMPLE 2

A solvent-free coating composition for coating high voltage insulators was prepared by mixing 46 parts by weight of hydroxyl terminated polydimethylsiloxane polymer of viscosity 2,000 centipoise (2 Pa·s) at 25°C and 4 parts by weight of surface treated amorphous silica (surface treated with hexamethyldisilazane) of specific gravity 2.2 and surface area of about 130 m²/g. Then, 6 parts by weight of methyl tris-(methyl ethyl ketoxime) silane and 1 part by weight of N-(2-aminoethyl-3-aminopropyl) trimethoxy silane were added and mixed. Then, 40 parts by weight of alumina trihydrate (having a median particle size of 13 µm, containing about 65.1 percent Al₂O₃, about 34.5 percent combined H₂O, about 0.3 percent Na₂O, about 0.02 percent CaO, about 0.01 percent SiO₂ and having a specific gravity of about 2.42) were added and mixed along with 0.1 parts by weight of dibutyltin dilaurate. To prepare a coating with the desired color, 3 parts by weight of pigment paste were also added.

The finished product had a viscosity that made it suitable for application by roller, brush and spray.

### EXAMPLE 3

A solvent-free coating composition useful for fire resistance was prepared by mixing 38 parts by weight of hydroxyl terminated polydimethylsiloxane polymer of viscosity of 2,000 centipoise (2 Pa·s) at 25°C, with 10 parts by weight of titanium dioxide of specific gravity 4, 8 parts by weight of melamine of density 1.5 g/ml and 36 parts by weight of a 1:6 mixture of amorphous silica to crystalline silica fillers, the amorphous silica having a specific gravity of 2.2 and a surface area of 150 m²/g. Then, 6 parts by weight of methyl tris-(methyl ethyl ketoxime) silane, 1 part by weight of N-(2-aminoethyl-3 aminopropyl) trimethoxysilane and 0.1 parts by weight of dibutyltin dilaurate were added.

The finished product, when applied at 2 mm dry film thickness to a carbon steel panel of 6.35 mm thickness, was blasted with a propane flame in excess of 1200 °C at a distance of 5 cm for a period of 4 hours. The temperature of the reverse side of the steel plate was recorded to an ultimate temperature of only 206°C.

### EXAMPLE 4

A solvent-free coating composition was prepared by mixing 46 parts by weight of hydroxyl terminated polydimethylsiloxane polymer of viscosity 2,000 centipoise (2 Pa·s) at 25°C with 5 parts by weight of amorphous silica having specific gravity of 2.2 and surface area of about 130 m²/g. Then, 4 parts by weight of methyl tris-(methyl ethyl ketoxime) silane, 2 parts by weight of bis-(methyl ethyl ketoxime) silane and 1 part by weight of N-(2-aminoethyl-3-aminopropyl) trimethoxy silane were added and mixed along with 0.1 parts by weight of dibutyltin dilaurate. Then, 39 parts by weight of quartz powder were also added and mixed. To prepare a coating with the desired color, 3 parts by weight of pigment paste were also added.

The finished product had a viscosity suitable for application by roller, brush and spray.

The cured composition when applied to concrete substrates at 250 µm dry film thickness exhibited excellent adhesion, elongation and provided resistance to tear or cracks caused by thermal or mechanical movement.

### EXAMPLE 5

A solvent-free coating composition for resistance to cathodic disbondment was prepared by mixing 27 parts by weight of hydroxyl terminated polydimethylsiloxane polymer of viscosity 1500 cP (1.5 Pa·s) at 25°C with 10 parts by weight of silver coated glass particles of average particle size of 3 µm, 3 parts by weight of amorphous silica of surface area of about 125 m²/g and 50 parts by weight of zinc metal powder of specific gravity 7 and average particle size 0.25 µm. Then, 4 parts by weight of methyl tris-(methyl ethyl ketoxime) silane, 2 parts by weight of bis-(methyl ethyl ketoxime) silane, 1 part by weight of N-(2-aminoethyl-3-aminopropyl) trimethoxy silane were added and mixed along with 0.1 parts by weight of dibutyltin dilaurate. The cathodic protection coating could have been applied as a base coat where resistance to cathodic disbondment would have been required.

A dry film thickness of 500 µm of coating was applied to a carbon steel pipe of 12.7 mm nominal diameter and tested for 30 days in accordance to the ASTM G8 standard. The coating showed only 1 mm of disbondment, which is well below the maximum allowable disbondment of 4 mm. In addition, the coating showed no bubbling under the coating surface. protecting surfaces for spillage containment around tank farms and the like. The composition of Example 1 may be coated onto a heavy-duty fabric which is then utilized to line the interior of the spillage catch basins around a storage tank. Samples of geo-textile fabric may be sprayed with the composition of Example 1 of the present invention to coat the fabric. Treated and untreated samples of fabric may be exposed to 10% caustic soda aqueous solution, diesel oil, furnace oil by placing samples of these materials on the surface of the fabric for up to seven days. No deterioration of the treated fabric is expected and the deposits of the material are expected to be easily cleaned without any noticeable loss of weight of the material. In contrast, untreated fabric has been previously shown to not retain the material on the surface and the caustic soda solution has been shown to cause deterioration of the untreated fabric material within 24 hours.

The compositions of the present invention are useful in many instances where protection of surfaces against environmental effects is desired. These compositions include the composition of the above examples as well as other compositions, the formulation of which is well within the skill of the ordinary workman in the art. The selection of the various components and their proportions will be immediately apparent depending upon the desired properties of the final coating.

The present invention provides for solvent-free coating compositions that provide numerous benefits above presently available formulations, such as the absence of solvent, which minimizes coating shrinkage, thus requiring less coating be applied to the substrate in order to achieve a desired final coating dry film thickness.

Elimination of solvent in compositions of the present invention has demonstrated higher levels of scratch resistance, improved tensile strength and greater gloss levels than found in coatings of present technology. Improved gloss is attributable to a smoother surface finish, which further results in a coating of lowered surface free energy. The attribute of reduced surface free energy improves the hydrophobicity and release characteristics of coatings formulated as per the present invention. This, in turn, enhances the coating for use as a fouling release agent in marine applications, as an anti-graffiti coating and as a coating for improved suppression of leakage current when applied to high voltage insulators. Furthermore, the elimination of solvent in the coating compositions broadens the allowable application environments and reduces the specific storage requirements of the finished product. In addition, the absence of solvents minimizes health, safety and environmental impacts as emissions of volatile compounds is reduced. Specific health and safety detriments eliminated through the absence of solvents are pulmonary edema, suppression of central nervous system functions, tissue necrosis due to transdermal absorption and dermatitis.

## Claims

1. A polyorganosiloxane rubber coating composition for use as a high-gloss coating on surfaces, the composition comprising a functionalized polydiorganosiloxane polymerizable under suitable conditions to form a coating; one or more additives selected from catalysts or initiators for curing the polymerizable polydiorganosiloxane, adhesion promoters, reinforcing fillers, and inorganic extending or non-reinforcing fillers; whereby the composition is free of solvents or diluents, the viscosity of the polydiorganosiloxane is chosen to allow the composition to be applied by standard techniques to cure with minimal shrinkage and high gloss,
wherein the composition is obtained by mixing the following:
a) from 10 to 90 weight percent of one or more polydiorganosiloxane polymers of the general formula
HO[(R)₂SiO]ₙ(R)₂SiOH
in which R is a monovalent alkyl or alkylene radical having 1 to 8 carbon atoms, optionally substituted with one or more halogen atoms, or a phenyl radical, optionally substituted with one or more halogen atoms, and n has an average value such that the viscosity is from 0.00065 to 40 Pas (0.65 to 40,000 centipoise) at 25°C;
b) from 0 to less than 90 weight percent of an inorganic extending or non-reinforcing filler;
c) from about 0.1 to 50 weight percent of an amorphous SiO₂ reinforcing filler, preferably from 1 to 30 weight percent, and more preferably from 2 to 20 weight percent;
d) from 0.1 to 25 weight percent of a cross-linking agent of general formula 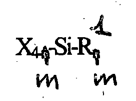 where R¹ is an alkyl, alkylene or phenyl radical, preferably methyl or ethyl, X is an alkyl radical with a functional group selected from carboxyl, ketoximino, alkoxy, carbonyl or amine linked directly to the silicone atom and m is 0 or 1;
e) from 0 to 25 weight percent of a polymer chain extender of formula
X₂-Si-R¹₂
where ¹R is an alkyl, alkylene or phenyl radical, preferably methyl or ethyl, and X is an alkyl radical with a functional group selected from carboxyl, ketoximino, alkoxy, carbonyl or amine linked directly to the silicone atom.
f) from 0 to 10 weight percent of an adhesion promoter of the general formula 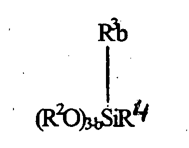 in which R² and R³ are independently selected from monovalent alkyl or alkylene radicals having 1 to 8 carbon atoms or a phenyl radical which may optionally be substituted with an alkyl radical having 1 to 8 carbon atoms, b is an integer between 0 and 3, and R⁴ is a saturated, unsaturated or aromatic hydrocarbon radical having 1 to 10 carbon atoms which may optionally contain a functional group; and
g) from 0.01 to 5 weight percent of an organometallic salt as a condensation catalyst of the general formula 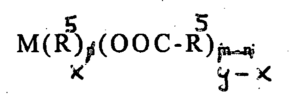 where M is a transition metal, preferably Ti, V, Sn and Zr, R is an alkyl or alkylene radical with 1 to 20 carbon atoms, x and y are integers having a value between 0 and 4.

2. A composition according to claim 1, wherein the cross-linking agent is oximinosilane cross-linking agent of the general formula
R"Si(ON=CR'₂)₃
in which R" and R' are independently selected from monovalent alkyl or alkylene radicals having 1 to 8 carbon atoms or a phenyl radical which may optionally be substituted with an alkyl radical having 1 to 8 carbon atoms;

3. A composition according to claim 1 or claim 2 wherein R is an akyl.

4. A composition acconling to claim 3 wherein R is methyl

5. A composition according to any preceding claim, wherein the adhesion promoter is a compound of the formula 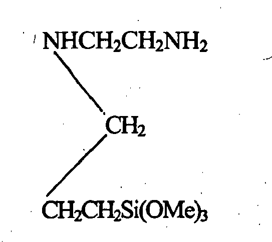 wherein Me is the methyl radical.

6. A composition according to any preceding claim, wherein the organometallic salt is an organotin salt of a carboxylic acid selected from the group consisting of dibutyitindiacetate, stannous octoate and dibutyltin dioctoate.

7. A composition according to claim 6 wherein the organotin salt of a carboxylic acid is a compound of the formula
(C₄H₉)₂Sn(OCOC₁₀H₂₀CH₃)₂.

8. A composition according to any preceding claim, wherein the inorganic extending or non-reinforcing filler is one or more materials selected from calcium carbonate, barium sulfate, iron oxide, diatomaceous earth, quartz, crystalline silica, titanium dioxide, alumina trihydrate, zinc oxide, zirconium oxide and chromic oxide.

9. A composition according to claim 8 wherein the inorganic extending or non-reinforcing filler is a combination of 0.5 to 5.0 weight percent of crystalline silica and 30 to 50 weight percent of alumina trihydrate, the alumina trihydrate having a median particle size of 13 µm, containing 65.1 percent Al₂0₃, 34.5 percent combined H₂O, 0.3 percent Na₂0, 0.02 percent CaO, 0.01 percent SiO₂ and having a specific gravityof 2.42, the alumina trihydrate being present in a proportion of 90 to 110 parts by weight per 100 parts by weight of the polyorganosiloxanes.

10. A composition according to claim 8 wherein the inorganic extending or non-reinforcing filler is one or more materials selected from iron oxide, zinc oxide, titanium dioxide, zirconium oxide or zinc chromate.

11. A composition according to claim 1, comprising:
about 46 weight percent of a hydroxyl terminated dimethyl polysiloxane fluid having a viscosity of 1,000 to 5,000 centipoise (0.1 to 0.5 Pa·s) at 25°C;
about 4 weight percent of a mixture of amorphous and crystalline SiO₂ fillers having a specific gravity of 2.2 and surface area of up to 130 m²/g;
about 6 weight percent of methyl tris-(methyl ethyl ketoxime)silane;
about 1 weight percent of N-(2 aminoethyl-3 aminopropyl)trimethoxysilane;
about 0.1 weight percent of dibutyltindilaurate;
about 40 weight percent of alumina trihydrate; and
about 3 weight percent of a pigment

12. A composition according to any preceding claim, wherein the surface of the amorphous silica reinforcing filler is treated with organic molecules such as hexamethyldisilazane or polydimethylsiloxane or organosilane

13. A method of providing a surface with a high-gloss coating comprising
(1) applying to the surface a thin layer of a one-part polyorganosiloxane rubber composition according to claim 1
(2) allowing the layer of the one-part polyorganosiloxane rubber composition to cure at room temperature to a silicone elastomer.

## Patentansprüche

1. Eine Polyorganosiloxangummibeschichtungszusammensetzung zur Verwendung als Hochglanzbeschichtung auf Oberflächen, wobei die Zusammensetzung ein unter geeigneten Bedingungen unter Ausbildung einer Beschichtung polymerisierbares funktionalisiertes Polydiorganosiloxan, ein oder mehr Additive, ausgewählt aus Katalysatoren oder Initiatoren, zum Härten des polymerisierbaren Polydiorganosiloxans, Haftvermittler, verstärkende Füllstoffe und anorganische streckende oder nichtverstärkenden Füllstoffen enthält; wobei die Zusammensetzung frei von Lösungsmitteln oder Verdünnungsmitteln ist, die Viskosität des Polydiorganosiloxans so ausgewählt ist, dass die Zusammensetzung mittels Standardverfahren appliziert werden kann, um mit minimaler Schrumpfung und hohem Glanz auszuhärten,
wobei die Zusammensetzung durch Vermischen der folgenden Bestandteile erhalten wird:
a) von 10 bis 90 Gewichtsprozent von einem oder mehreren Polydiorganosiloxanpolymeren mit der allgemeinen Formel
**HO[(R)₂SiO]ₙ(R)₂SiOH**
in der R ein monovalentes Alkyl- oder Alkylenradikal mit 1 bis 8 Kohlenstoffatomen ist, optional substituiert mit einem oder mehr Halogenatomen oder ein Phenylradikal, optional substituiert mit einem oder mehr Halogenatomen, und n einen durchschnittlichen Wert hat, sodass die Viskosität zwischen 0,00065 bis 40 Pa·s (0,65 bis 40.000 Zentipoise) bei 25°C beträgt;
b) von 0 bis weniger als 90 Gewichtsprozent eines anorganischen streckenden oder nichtverstärkenden Füllstoffs;
c) von ungefähr 0,1 bis 50 Gewichtsprozent eines amorphen SiO₂ verstärkenden Füllstoffs, vorzugsweise von 1 bis 30 Gewichtsprozent und besonders bevorzugt von 2 bis 20 Gewichtsprozent;
d) von 0,1 bis 25 Gewichtsprozent eines Vernetzungsmittels mit der allgemeinen Formel 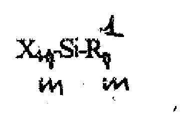 wobei R¹ ein Alkyl-, Alkylen- oder Phenylradikal ist, vorzugsweise Methyl oder Ethyl, X ein Alkylradikal mit einer funktionellen Gruppe ist, ausgewählt aus Carboxyl, Ketoximino, Alkoxy, Carbonyl oder Amin, das direkt an das Siliziumatom gebunden ist, und m 0 oder 1 ist;
e) von 0 bis 25 Gewichtsprozent eines Polymerkettenverlängerers der Formel 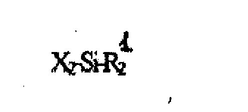 wobei R¹ ein Alkyl-, Alkylen- oder Phenylradikal ist, vorzugsweise Methyl oder Ethyl, X ein Alkylradikal mit einer funktionellen Gruppe ist, ausgewählt aus Carboxyl, Ketoximino, Alkoxy, Carbonyl oder Amin, das direkt an das Siliziumatom gebunden ist
f) von 0 bis 10 Gewichtsprozent eines Haftvermittlers mit der allgemeinen Formel 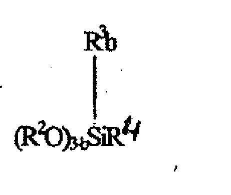 in der R² und R³ unabhängig voneinander ausgewählt sind aus monovalenten Alkyl- oder Alkylenradikalen mit 1 bis 8 Kohlenstoffatomen oder einem Phenylradikal, das optional mit einem Alkylradikal mit 1 bis 8 Kohlenstoffatomen substituiert werden kann, b eine ganze Zahl zwischen 0 und 3 ist und R⁴ ein gesättigtes, ungesättigtes oder aromatisches Kohlenwasserstoffradikal mit 1 bis 10 Kohlenstoffatomen ist, das optional eine funktionelle Gruppe enthalten kann; und
g) von 0,01 bis 5 Gewichtsprozent eines organometallischen Salzes als Kondensationskatalysator mit der allgemeinen Formel 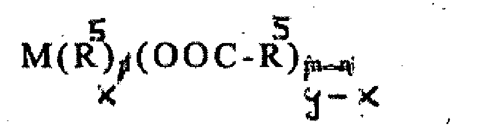 wobei M ein Übergangsmetall ist, vorzugsweise Ti, V, Sn und Zr, R ein Alkyl- oder Alkylenradikal mit 1 bis 20 Kohlenstoffatomen ist, x und y ganze Zahlen mit einem Wert zwischen 0 und 4 sind.

2. Eine Zusammensetzung nach Anspruch 1, wobei das Vernetzungsmittel ein Oximinosilan-Vernetzungsmittel ist mit der allgemeinen Formel
**R"Si(ON=CR'₂)₃**
in dem R" und R' unabhängig voneinander ausgewählt sind aus monovalenten Alkyl- oder Alkylenradikalen mit 1 bis 8 Kohlenstoffatomen oder einem Phenylradikal, das optional mit einem Alkylradikal mit 1 bis 8 Kohlenstoffatomen substituiert ist

3. Ein Zusammensetzung nach Anspruch 1 oder Anspruch 2, wobei R ein Alkyl ist.

4. Eine Zusammensetzung nach Anspruch 3, wobei R Methyl ist.

5. Eine Zusammensetzung nach einem der vorherigen Ansprüche, wobei der Haftvermittler eine Verbindung ist mit der Formel 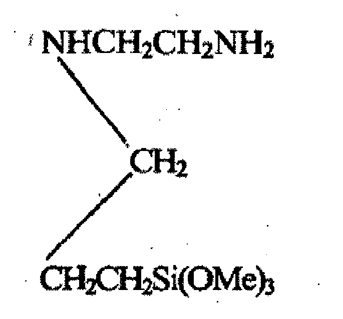 wobei Me ein Methylradikal ist.

6. Eine Zusammensetzung nach einem der vorherigen Ansprüche, wobei das organometallische Salz ein Organozinnsalz einer Carbonsäure ist, ausgewählt aus der Gruppe bestehend aus Dibutylzinndiacetat, Zinnoktoat und Dibutylzinndioktoat.

7. Eine Zusammensetzung nach Anspruch 6, wobei das Organozinnsalz einer Carbonsäure eine Verbindung ist der Formel
(**C₄H₉**)**₂Sn**(**OCOC₁₀H₂₀CH₃)₂.**

8. Eine Zusammensetzung nach einem der vorherigen Ansprüche, wobei der anorganische streckende oder nichtverstärkende Füllstoff ein oder mehrere Materialien ausgewählt aus Calciumcarbonat, Bariumsulfat, Eisenoxid, Kieselgur, Quarz, kristallines Siliziumdioxid, Titandioxid, Aluminiumtrihydrat, Zinkoxid, Zirkoniumoxid und Chromoxid ist.

9. Eine Zusammensetzung nach Anspruch 8, wobei der anorganische streckende oder nichtverstärkende Füllstoff eine Zusammenstellung ist aus 0,5 bis 5,0 Gewichtsprozent kristallinem Siliziumdioxid und 30 bis 50 Gewichtsprozent Aluminiumtrihydrat, wobei das Aluminiumtrihydrat eine mittlere Partikelgröße von 13µm hat, enthaltend 65,1 Prozent Al₂O₃, 34,5 Prozent gebundenes H₂O, 0,3 Prozent Na₂O, 0,02 Prozent CaO, 0,01 Prozent SiO₂ und mit einer relativen Dichte von 2,42, wobei das Aluminiumtrihydrat zu einem Anteil von 90 bis 110 Gewichtsteilen pro 100 Gewichtsteilen des Polyorganosiloxanes vorhanden ist.

10. Eine Zusammensetzung nach Anspruch 8, wobei der anorganische streckende oder nichtverstärkende Füllstoff ein oder mehrere Materialien ist, ausgewählt aus Eisenoxid, Zinkoxid, Titandioxid, Zirkoniumoxid oder Zinkchromat.

11. Eine Zusammensetzung nach Anspruch 1, umfassend:
ungefähr 46 Gewichtsprozent einer Hydroxyl-terminierten Polysiloxanflüssigkeit mit einer Viskosität von 1.000 bis 5.000 Zentipoise (0,1 bis 0,5 Pa·s) bei 25°C;
ungefähr 4 Gewichtsprozent einer Mischung aus amorphen und kristallinen SiO₂ Füllstoffen mit einer relativen Dichte von 2,2 und einer Oberfläche von bis zu 130 m²/g;
ungefähr 6 Gewichtsprozent Methyltris-(methlethylketoxim)silan;
ungefähr 1 Gewichtsprozent N-(2-Aminoethyl-3-aminopropyl)trimetoxysilan;
ungefähr 0,1 Gewichtsprozent Dibutylzinndilaurat;
ungefähr 40 Gewichtsprozent Aluminiumtrihydrat; und
ungefähr 3 Gewichtsprozent eines Pigments.

12. Eine Zusammensetzung nach einem der vorherigen Ansprüche, wobei die Oberfläche des amorphen Siliziumdioxid verstärkenden Füllstoffs mit organischen Molekülen wie beispielsweise Hexamethyldisilazan oder Polydimethylsiloxan oder Organosilan behandelt wurde.

13. Ein Verfahren zum Bereitstellen einer Oberfläche mit einer Hochglanzbeschichtung umfassend
(1) Aufbringen einer dünnen Schicht einer einkomponentigen Polyorganosiloxangummizusammensetzung nach Anspruch 1 auf die Oberfläche
(2) Aushärtenlassen der Schicht der einkomponentigen Polyorganosiloxangummizusammensetzung bei Raumtemperatur zu einem Silikonelastomer.

## Revendications

1. Composition de revêtement à base d'un caoutchouc de polyorganosiloxane, pour utilisation en tant que revêtement à haut brillant sur des surfaces, la composition comprenant un polydiorganosiloxane fonctionnalisé, polymérisable dans des conditions convenant à la formation d'un revêtement ; un ou plusieurs additifs choisis parmi les catalyseurs ou les amorceurs de durcissement du polydiorganosiloxane polymérisable, les promoteurs d'adhérence, les charges de renfort et les charges inorganiques de dilution ou de non-renfort ; la composition étant exempte de solvants ou de diluants, la viscosité du polydiorganosiloxane étant choisie de façon à permettre à la composition d'être appliquée par des techniques standard de façon à durcir avec un retrait minimal et un brillant élevé,
la composition étant obtenue par mélange des éléments suivants :
a) d'environ 10 à environ 90 pourcents en poids d'un ou plusieurs polymères de polydiorganosiloxane de formule générale
**HO[(R)₂SiO]ₙ(R)₂SiOH**
dans laquelle R est un radical alkyle ou alkylène monovalent ayant 1 à 8 atomes de carbone, en option substitué par un ou plusieurs atomes d'halogène, ou un radical phényle, en option substitué par un ou plusieurs atomes d'halogène, et n a une valeur moyenne telle que la viscosité soit de 0,00065 à 40 Pa.s (0,65 à 40 000 centipoises) à 25°C ;
b) de 0 à moins de 90 pourcents en poids d'une charge inorganique de dilution ou de non-renfort ;
c) d'environ 0,1 à 50 pourcents en poids d'une charge de renfort à base de SiO₂ amorphe, de préférence de 1 à 30 pourcents en poids et plus particulièrement de 2 à 20 pourcents en poids ;
d) de 0,1 à 25 pourcents en poids d'un agent de réticulation de formule générale
X₄ₘ-Si-R¹ₘ
dans laquelle R¹ est un radical alkyle, alkylène ou phényle, de préférence méthyle ou éthyle, X est un radical alkyle ayant un groupe fonctionnel choisi parmi les groupes carboxyle, cétoximino, alcoxy, carbonyle ou amine directement lié à l'atome de silicium, et m vaut 0 ou 1 ;
e) de 0 à 25 pourcents en poids d'un extendeur de chaîne polymère de formule
X₂-Si-R₂¹
dans laquelle R¹ est un radical alkyle, alkylène ou phényle, de préférence méthyle ou éthyle, et X est un radical alkyle ayant un groupe fonctionnel choisi parmi les groupes carboxyle, cétoximino, alcoxy, carbonyle ou amine, directement lié à l'atome de silicium,
f) de 0 à 10 pourcents en poids d'un promoteur d'adhérence de formule générale 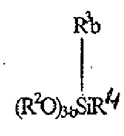 dans laquelle R² et R³ sont chacun indépendamment de l'autre choisis parmi les radicaux alkyle ou alkylène monovalent ayant 1 à 8 atomes de carbone ou un radical phényle pouvant en option être substitué par un radical alkyle ayant 1 à 8 atomes de carbone, b est un entier compris entre 0 et 3, et R⁴ est un radical hydrocarboné saturé, insaturé ou aromatique, ayant 1 à 10 atomes de carbone, qui peut en option contenir un groupe fonctionnel ; et
g) de 0,01 à 5 pourcents en poids d'un sel organométallique servant de catalyseur de condensation, de formule générale
M(R⁵ₓ)(OOC-R⁵)_{y-x}
dans laquelle M est un métal de transition, de préférence Ti, V, Sn et Zr, R est un radical alkyle ou alkylène ayant 1 à 20 atomes de carbone, x et y sont des entiers ayant une valeur comprise entre 0 et 4.

2. Composition selon la revendication 1, dans laquelle l'agent de réticulation est un agent de réticulation de type oximinosilane de formule
R"Si (ON=CR'₂)₃
dans laquelle R" et R' sont chacun indépendamment de l'autre choisis parmi les radicaux alkyle ou alkylène monovalents ayant 1 à 8 atomes de carbone ou un radical phényle pouvant en option être substitué par un radical alkyle ayant 1 à 8 atomes de carbone.

3. Composition selon la revendication 1 ou 2, dans laquelle R est un groupe alkyle.

4. Composition selon la revendication 3, dans laquelle R est le groupe méthyle.

5. Composition selon l'une quelconque des revendications précédentes, dans laquelle le promoteur d'adhérence est un composé de formule 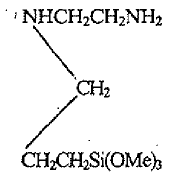 dans laquelle Me est le radical méthyle.

6. Composition selon l'une quelconque des revendications précédentes, dans laquelle le sel organométallique est un sel d'organo-étain d'un acide carboxylique choisi dans le groupe consistant en le diacétate de dibutylétain, l'octanoate stanneux et le dioctanoate de dibutylétain.

7. Composition selon la revendication 6, dans laquelle le sel d'organo-étain d'un acide carboxylique est un composé de formule
**(C₄H₉)₂Sn(OCOC₁₀H₂₀CH₃)₂.**

8. Composition selon l'une quelconque des revendications précédentes, dans laquelle la charge inorganique de dilution ou de non-renfort est constituée d'un ou plusieurs matériaux choisis parmi le carbonate de calcium, le sulfate de baryum, l'oxyde de fer, la terre de diatomées, le quartz, la silice cristalline, le dioxyde de titane, l'alumine trihydratée, l'oxyde de zinc, l'oxyde de zirconium et l'oxyde chromique.

9. Composition selon la revendication 8, dans laquelle la charge inorganique de dilution ou de non-renfort est une combinaison de 0,5 à 5,0 pourcents en poids de silice cristalline et de 30 à 50 pourcents en poids d'alumine trihydratée, l'alumine trihydratée ayant une granulométrie médiane de 13 µm, contenant 65,1 pourcents d'Al₂O₃, 34,5 pourcents de H₂O combinée, 0,3 pourcent de Na₂O, 0,02 pourcent de CaO, 0,01 pourcent de SiO₂ et ayant une densité de 2,42, l'alumine trihydratée étant présente selon une proportion de 90 à 110 parties en poids pour 100 parties en poids des polyorganosiloxanes.

10. Composition selon la revendication 8, dans laquelle la charge inorganique de dilution ou de non-renfort est constituée d'un ou plusieurs matériaux choisis parmi l'oxyde de fer, l'oxyde de zinc, le dioxyde de titane, l'oxyde de zirconium ou le chromate de zinc.

11. Composition selon la revendication 1, comprenant :
environ 46 pourcents en poids d'un fluide diméthylpolysiloxane à terminaison hydroxyle ayant une viscosité de 1000 à 5000 centipoises (0,1 à 0,5 Pa.s) à 25°C ;
environ 4 pourcents en poids d'un mélange de charges de SiO₂ amorphe et cristalline, ayant une densité de 2,2 et une aire spécifique allant jusqu'à 130 m²/g ;
environ 6 pourcents en poids de méthyl-tris(méthyléthylcétoxime)silane ;
environ 1 pourcent en poids de N-(2-aminoéthyl-3-aminopropyl)triméthoxysilane ;
environ 0,1 pourcent en poids de dilaurate de dibutylétain ;
environ 40 pourcents en poids d'alumine trihydratée ; et
environ 3 pourcents en poids d'un pigment.

12. Composition selon l'une quelconque des revendications précédentes, dans laquelle la surface de la charge de renfort de type silice amorphe est traitée avec des molécules organiques telles que l'hexaméthyldisilazane ou le polydiméthylsiloxane ou l'organosilane.

13. Procédé pour pourvoir une surface d'un revêtement à haut brillant, comprenant
(1) l'application sur la surface d'une couche mince d'une composition de caoutchouc de polyorganosiloxane monocomposant selon la revendication 1,
(2) le fait de permettre à la couche de la composition de caoutchouc de polyorganosiloxane mono- composant de durcir à la température ambiante pour donner un élastomère de silicone.
